**Europäisches Patentamt**

**European Patent Office**

**Office européen des brevets**

(19)

(11) Numéro de publication: **0 207 957**

**B1**

(12)

# FASCICULE DE BREVET EUROPÉEN

(45) Date de publication du fascicule du brevet:
02.11.88

(51) Int. Cl.⁴: **B 01 D 53/36**

(21) Numéro de dépôt: **86900154.5**

(22) Date de dépôt: **11.12.85**

(86) Numéro de dépôt international:
**PCT/FR 85/00358**

(87) Numéro de publication internationale:
**WO 86/03426 (19.06.86 Gazette 86/13)**

(54) **PROCEDE D'ELIMINATION DES COMPOSES COS ET CS 2 CONTENUS DANS UN GAZ INDUSTRIEL.**

(30) Priorité: **12.12.84 FR 8418971**

(43) Date de publication de la demande:
**14.01.87 Bulletin 87/3**

(45) Mention de la délivrance du brevet:
**02.11.88 Bulletin 88/44**

(84) Etats contractants désignés:
**BE DE GB IT NL**

(56) Documents cité:
**DE-A-1 667 590**
**FR-A-2 501 532**
**GB-A-952 555**

(73) Titulaire: **SOCIETE NATIONALE ELF AQUITAINE (PRODUCTION), Tour Elf 2, Place de la Coupole La Défense 6, F-92400 Courbevoie (FR)**

(72) Inventeur: **VOIRIN, Robert, Lotissement des Cascades, Rue Daniel Argote F-64300 Orthez (FR)**

(74) Mandataire: **Boillot, Marc, SOCIETE NATIONALE ELF AQUITAINE Division Propriété Industrielle Tour Elf, F-92078 Paris la Défense Cédex 45 (FR)**

**Description**

L'invention se rapporte à un procédé d'élimination des composés COS et $CS_2$ contenu dans un gaz industriel, et plus particulièrement dans un gaz destiné à être utilisé en synthèse organique.

Divers gaz industriels, qui sont produits en vue d'être utilisés en synthèse organique comme, par exemple, les gaz issus de la gazéification du charbon et utilisables dans les réactions de méthanation ou encore l'hydrogène sulfuré employé dans l'industrie chimique pour la synthèse de produits thioorganiques, renferment, de par leurs méthodes d'obtention, des quantités plus ou moins grandes de COS et/ou de $CS_2$. Ces composés organiques du soufre sont généralement des éléments perturbateurs pour les réactions de synthèse auxquelles participent les gaz industriels car ils constituent en particulier des poisons des catalyseurs utilisés pour promouvoir lesdites réactions.

Avant d'engager en synthèse un gaz industriel renfermant COS et/ou $CS_2$ à titre d'impuretés, il est nécessaire de soumettre ce gaz à une épuration très poussée en vue d'éliminer lesdits composés du soufre.

Les techniques d'épuration par lavage au moyen d'un absorbant liquide sélectif régénérable tel qu'une solution d'amine, qui sont utilisées usuellement pour éliminer $H_2S$ contenu dans les gaz, ne conviennent généralement pas pour éliminer COS et $CS_2$, car ces composés ne sont pratiquement pas fixés par le liquide absorbant.

On pourrait éliminer lesdits composés COS et $CS_2$ en faisant passer le gaz à épurer les contenant au contact d'un absorbant solide du type oxyde de zinc, qui fixe ces composés d'une manière irréversible. Ceci entraîne une consommation importante d'absorbant solide, qui rend peu économique une telle méthode d'épuration et réduit fortement son intérêt. En outre, il n'est pas possible d'utiliser cette méthode d'épuration lorsque certains composants essentiels du gaz à épurer sont susceptibles de réagir également avec l'absorbant solide comme c'est en particulier le cas lorsque le gaz à traiter consiste en $H_2S$.

On sait que les gaz traités dans les convertisseurs catalytiques d'une unité à soufre renferment de faibles quantités de COS et $CS_2$ à côté d'une quantité plus importante des réactifs $H_2S$ et $SO_2$ qui participent à la réaction CLAUS de formation de soufre et d'une quantité substantielle de vapeur d'eau d'environ 30 % en volume et que lesdits composés COS et $CS_2$ subissent une hydrolyse partielle en $H_2S$, au contact du catalyseur CLAUS présent dans les convertisseurs catalytiques, du fait de la forte teneur en vapeur d'eau des gaz traités, cette hydrolyse étant sensible dans le premier convertisseur où la température est d'environ 350°C et négligeable dans les convertisseurs suivants où la température est moins élevée.

En particulier dans la demande de brevet européen publiée sous le N°0 060 741, on montre qu'au contact d'un catalyseur comportantet $TiO_2$ un sulfate d'un métal alcalino-terreux les composés $CS_2$ et COS présents en faibles concentrations, à savoir 1 % en volume pour $CS_2$ et 0,3 % en volume pour COS, dans un gaz renfermant des quantités plus importantes d'$H_2S$ et de $CO_2$ et une quantité substantielle de vapeur d'eau (28 % en volume), c'est-à-dire dans un gaz ayant sensiblement la composition des gaz traités dans le premier convertisseur d'une usine à soufre, sont complètement hydrolysés en $H_2S$ à une température de 340°C. Dans le cas de l'hydrolyse du $CS_2$, exemple 10 de la référence précitée, la quantité de vapeur d'eau contenue dans le mélange réactionnel correspond à une valeur du rapport molaire $H_2O : CS_2$ égale à 28, tandis que dans le cas de l'hydrolyse du COS, exemple 11 de la référence ci-dessus, la quantité de vapeur d'eau présente dans le mélange réactionnel correspond à une valeur du rapport molaire $H_2O : COS$ égale à 93.

On a trouvé que l'on pouvait éliminer la quasi totalité des composés COS et $CS_2$ présents dans un gaz industriel, en concentration globale pouvant aller jusqu'à quelques pour cents en volume, en faisant appel à une hydrolyse en $H_2S$ utilisant des catalyseurs à base d'oxyde de titane et en particulier les catalyseurs précités à base d'oxyde de titane et d'un sulfate d'un métal alcalino-terreux, mais en travaillant à des températures moins élevées et avec des quantités de vapeur d'eau plus réduites que celles enseignées dans la demande de brevet européen citée plus haut.

Le procédé suivant l'invention pour l'élimination des composés COS et $CS_2$ d'un gaz industriel renfermant l'un ou l'autre de ces composés ou les deux en quantité correspondant à une concentration en volume du composé COS ou $CS_2$ lorsqu'il est seul ou du mélange desdits composés allant de 0,01 % à 6% (et plus particulièrement de 0,05 % a 4%), est du type dans lequel on fait passer ledit gaz renfermant une quantité appropriée de vapeur d'eau au contact d'un catalyseur à base d'oxyde de titane place dans une zone de réaction et il se caractérise en ce que l'on contrôle la quantité de vapeur d'eau présente dans le gaz amené au contact du catalyseur de telle sorte que, dans ledit gaz, le rapport R du nombre de moles de vapeur d'eau au nombre de moles du ou des composés COS et $CS_2$ présents dans le gaz ait une valeur allant de la valeur stoechiométrique pour une hydrolyse complète desdits composés à $\frac{50}{1 + 1,5 p}$, avec p représentant la fraction molaire de $CS_2$ dans la quantité molaire totale de COS et $CS_2$ contenue dans le gaz, en ce que l'on maintient la zone de réaction à des températures correspondant à des températures en sortie de ladite zone comprises entre $\theta_1 = 100 (0,6 + 1,6 q)$°C et $\theta_2 = 100 (2,2 + q)$°C et en ce que l'on fixe le temps de contact du mélange réactionnel, c'est-à-dire du gaz à traiter renfermant la quantité appropriée de vapeur d'eau, avec le catalyseur a une valeur allant de $(4 - 2q)$ secondes à $(10 - 2q)$ secondes, q ayant la valeur zéro si p a une valeur allant de zéro à 0,1 et la valeur 1 dans les autres cas.

De préférence la température dans la zone de réaction est maintenue à des valeurs correspondant à des températures en sortie de ladite zone allant de $100 (1 + 1,5 q)$°C à $100 (2 + q)$°C, q ayant la signification donnée plus haut.

Les temps de contact du mélange réactionnel avec le catalyseur se situent de préférence de $(5 - 2q)$

secondes à (8 - 2q) secondes, q étant défini comme indiqué précédemment.

Lorsque le gaz à traiter renferme COS comme seul composé organique du soufre ou COS et $CS_2$ en proportions correspondant à des valeurs de p au plus égales à 0,1 on opère de préférence en contrôlant la quantité de vapeur d'eau dans le gaz amené au contact du catalyseur pour que le rapport R ait une valeur allant de 5 à 25, en maintenant la température dans la zone de réaction à des valeurs correspondant à des températures en sortie de ladite zone allant de 100 à 200°C et en choisissant un temps de contact du mélange réactionnel avec le catalyseur allant de 5 à 8 secondes.

Lorsque le gaz à traiter renferme $CS_2$ comme seul composé organique du soufre, on opère de préférence en contrôlant la quantité de vapeur d'eau dans le gaz amené au contact du catalyseur pour que le rapport R ait une valeur de 5 à 20, en maintenant la température dans la zone de réaction à des valeurs correspondant à des températures en sortie de ladite zone allant de 250 à 300°C , et en choisissant un temps de contact du mélange réactionnel avec le catalyseur allant de 3 à 6 secondes.

Lorsque le gaz à traiter renferme à la fois COS et $CS_2$ en proportions correspondant à des valeurs de p supérieures à 0,1, on opère de préférence en contrôlant la quantité de vapeur d'eau dans le gaz amené au contact du catalyseur pour que le rapport R ait une valeur allant de 5 á 25, en maintenant la température dans la zone de réaction à des valeurs correspondant à des températures en sortie de ladite zone allant de 250 à 300°C et en choisissant un temps de contact du mélange réactionnel avec le catalyseur allant de 5 à 8 secondes.

Le contrôle de la quantité de vapeur d'eau dans le gaz amené au contact du catalyseur peut être réalisé par addition de vapeur d'eau au gaz à traiter, si la teneur en vapeur d'eau de ce dernier est insuffisante, ou par condensation d'une partie de la vapeur d'eau qu'il contient si la teneur en vapeur d'eau dudit gaz est trop élevée. Lorsque le gaz à traiter possède une teneur en vapeur d'eau située dans les limites suivant l'invention, il peut être amené au contact du catalyseur sans nécessiter un ajustement de sa teneur en vapeur d'eau.

La température du gaz à traiter renfermant la quantité appropriée de vapeur d'eau, au moment de l'amenée dudit gaz au contact du catalyseur, doit avoir une valeur suffisante pour que la température du mélange réactionnel en sortie de la zone de réaction ait la valeur désirée. Si besoin est, le gaz à traiter renfermant la quantité appropriée de vapeur d'eau, est soumis à un préchauffage pour ajuster sa température à une valeur convenable.

En fonction des impératifs du procédé de synthèse dans lequel est engagé le gaz traité suivant l'invention, l'$H_2S$ résultant de l'hydrolyse des composés COS et $CS_2$ peut être éliminé ou non du gaz traité le contenant. De même, on peut être amené, si besoin est, à séparer tout ou partie de la vapeur d'eau contenue dans le gaz traité. Ces opérations d'élimination d'$H_2S$ et de séparation de vapeur d'eau peuvent être réalisées en faisant appel aux techniques bien connues dans l'art à cet effet. Ainsi l'élimination de l'$H_2S$ peut être effectuée par lavage du gaz traité suivant l'invention, au moyen d'un liquide absorbant régénérable qui fixe l'$H_2S$ de manière réversible. Un tel liquide absorbant régénérable peut consister en particulier en une solution aqueuse d'une amine ou d'un aminoacide et notamment en une solution aqueuse d'une alcanolamine telle que monoéthanolamine, diéthanolamine, triéthanolamine, méthyldiéthanolamine et diisopropanolamine. Les traces d'$H_2S$ , qui subsistent encore dans le gaz après lavage à l'aide du liquide absorbant régénérable, peuvent être retenues par passage dudit gaz dans un lit d'un oxyde métallique tel que ZnO fixant l'$H_2S$ de manière irréversible.

Comme indiqué précédemment, le catalyseur utilisé dans le procédé suivant l'invention est à base d'oxyde de titane et plus spécialement renferme une proportion pondérale majoritaire d'oxyde de titane. En particulier ledit catalyseur consiste en oxyde de titane ou en un mélange d'oxyde de titane et d'un sulfate d'un métal alcalino-terreux, ledit métal étant plus particulièrement choisi dans le groupe formé par le calcium, le baryum, le strontium et le magnésium, le sulfate alcalino-terreux préféré étant le sulfate de calcium.

Les catalyseurs précités comportant de l'oxyde de titane et éventuellement un sulfate de métal alcalino-terreux peuvent encore renfermer jusqu'à 30 % de leurs poids d'au moins un constituant choisi parmi la silice, l'alumine, les argiles, les silicates, le sulfate de titane et les fibres céramiques.

Dans les catalyseurs utilisés suivant l'invention, qui renferment de l'oxyde de titane et un sulfate d'un métal alcalino-terreux, avec ou sans constituant additionnel du type cité plus haut, le rapport de la proportion pondérale en oxyde de titane, exprimée en $TiO_2$, à la proportion pondérale en sulfate de métal alcalino-terreux dans le catalyseur calciné peut aller de 99 : 1 à 60 : 40 et se situe de préférence de 99 : 1 à 80 : 20.

Les catalyseurs définis ci-dessus ont des surfaces spécifiques, mesurées par la méthode d'absorption d'azote dite méthode BET, comprises entre 5 et 300 $m^2/g$ et de préférence entre 10 et 240 $m^2/g$, et des volumes poreux totaux, déterminés par la méthode de pénétration au mercure, compris entre 0,05 et 0,6 $cm^3/g$ et se situant de préférence entre 0,1 et 0,4 $cm^3/g$. La résistance à l'attrition desdits catalyseurs est inférieure à 2 %.

La résistance à l'attrition est définie en % par le nombre représentant en grammes la quantité de poussières produite en vibrant pendant 10 minutes, à l'aide d'un vibreur de la marque FENWICK REX, 100 grammes de granulés du catalyseur placés sur un tamis N° 24 de 20 cm de diamètre de la série AFNOR X 11 - 501.

Les catalyseurs utilisés suivant l'invention peuvent être préparés par toute méthode connue dans l'art.

Un catalyseur renfermant de l'oxyde de titane et éventuellement un constituant additionnel du type précité peut être préparé en utilisant, par exemple, la méthode décrite dans le brevet français N° 80 09126 (Publication N° 2 481 145) du 23 Avril 1980. Pour obtenir un catalyseur renfermant de l'oxyde titane, un sulfate de métal alcalino-terreux et éventuellement un constituant additionnel tel que mentionné plus haut, on peut faire appel à l'une ou l'autre des méthodes décrites dans la demande de brevet européen publiée sous le N° 0 060 741.

Le procédé suivant l'invention offre un moyen commode pour éliminer les impuretés COS et $CS_2$ contenues

dans divers gaz industriels et rendre ainsi lesdits gaz aptes à être engagés dans les synthèses organiques en vue desquelles ils ont été produits.

Ainsi, en faisant appel au procédé suivant l'invention on peut par exemple produire un gaz de synthèse renfermant $H_2$ et CO et utilisable pour une réaction de méthanation à partir d'un gaz issu de la gazéification de charbon qui renferme $CS_2$, COS et $H_2S$ à titre d'impuretés gênantes. Pour ce faire, le gaz de gazéification de charbon est d'abord traité suivant l'invention pour transformer $CS_2$ et COS en $H_2S$, puis le gaz ainsi traité est soumis tout d'abord à un lavage au moyen d'un absorbant liquide régénérable tel que notamment une solution aqueuse de méthyldiéthanolamine pour fixer la plus grande partie de l'$H_2S$ présent dans le gaz et ensuite à une épuration finale par passage sur un oxyde métallique tel que ZnO pour retenir les dernières traces d'$H_2S$.

On peut également utiliser le procédé suivant l'invention pour traiter un gaz consistant en majeure partie en $H_2S$ et renfermant $CS_2$ et/ou COS à titre d'impuretés gênantes et ainsi produire un gaz utilisable comme source d'$H_2S$ pour la synthèse de composés thioorganiques. Dans ce cas le traitement suivant l'invention appliqué audit gaz se révèle particulièrement intéressant car le produit d'hydrolyse de $CS_2$ et COS, à savoir $H_2S$, n'a pas besoin d'être éliminé et le gaz issu du traitement peut être engagé directement dans la réaction de synthèse du produit thioorganique.

L'invention est illustrée par les exemples suivants donnés à titre non limitatif.

**Exemple 1:**

On traitait un gaz provenant de la gazéification de charbon et possédant la composition suivante en volume:

| | | |
|---|---|---|
| CO | 47 | % |
| $H_2$ | 24 | % |
| $H_2O$ | 1,6 | % |
| $CO_2$ | 6 | % |
| $H_2S$ | 1,4 | % |
| COS | 0,1 | % |
| $N_2$ | 1,9 | % |

Pour ce traitement on opérait dans un réacteur renfermant un catalyseur constitué d'oxyde de titane et de sulfate de calcium et préparé comme décrit dans l'exemple 5 de la demande de brevet européen N° 0 060 741. Ledit catalyseur possédait les caractéristiques suivantes:

| | |
|---|---|
| - Teneur pondérale en TiO | 89,8 % |
| - Teneur pondérale en $CaSO_4$ | 10,2 % |
| - Surface spécifique BET | 146 $m^2/g$ |
| - Volume poreux total | 0,35 $cm^3/g$ |
| - Résistance à l'attrition | 0,4 % |

Le gaz à traiter, pour lequel le rapport R du nombre de moles de vapeur d'eau au nombre de moles de COS était égal à 16 et ne nécessitait donc pas d'ajustement, était introduit dans le réacteur avec un débit correspondant à une VVH égale à 600 $h^{-1}$, le temps de contact dudit gaz avec le catalyseur étant de 6 secondes. La température du gaz amené au réacteur était telle que la température en sortie du réacteur était maintenue à 160°C.

Le gaz sortant du réacteur ne renfermait plus que 10 vpm de COS, ce qui correspond à un rendement de conversion du COS en $H_2S$ égal à 99 %.

Des essais de longue durée dans les conditions précitées mettaient en évidence un maintien de l'activité élevée du catalyseur même après plusieurs mois de fonctionnement.

**Exemple 2:**

On traitait un gaz destiné à servir de source d'$H_2S$ pour la synthèse de produits thioorganiques et renfermant, en volume, 93,56 % d'$H_2S$, 1,46 % de COS et 4,98 % de $CO_2$.

A ce gaz on ajoutait une quantité de vapeur d'eau représentant 30 % du volume dudit gaz et le mélange réactionnel ainsi obtenu, pour lequel le rapport R du nombre de moles de vapeur d'eau au nombre de moles de COS était égal à 20, était introduit dans un réacteur renfermant un catalyseur identique à celui utilisé dans l'exemple 1 avec un débit correspondant à une VVH égale à 600 $h^{-1}$, le temps de contact dudit mélange réactionnel avec le catalyseur étant de 6 secondes. La température du mélange réactionnel amené au réacteur était telle que la température en sortie du réacteur était égale à 160°C pendant toute la durée du traitement.

L'effluent sortant du réacteur ne renfermait plus que 100 vpm de COS, ce qui correspond à un rendement de conversion du COS en $H_2S$ égal à 99,3 %.

Des essais de longue durée dans les conditions précitées mettaient en évidence un maintien de cette valeur du rendement de conversion, ce qui traduit un maintien dans le temps de l'activité élevée du catalyseur.

En conservant les mêmes conditions opératoires que celles venant d'être décrites, on traitait le gaz renfermant $H_2S$ défini au début du présent exemple, après lui avoir ajouté 0,5 % en volume d'oxygène. Le taux de conversion du COS en $H_2S$ conservait la valeur précitée pendant plusieurs mois de fonctionnement, ce qui traduit la stabilité du catalyseur dans le temps en présence d'oxygène.

### Exemple 3:

On traitait un gaz destiné à servir de source d'$H_2S$ pour la synthèse de produits thioorganiques et renfermant, en volume, 93,5 % d'$H_2S$, 0,9 % de $CS_2$ et 5,6 % de $CO_2$.

A ce gaz on ajoutait une quantité de vapeur d'eau représentant 15 % du volume dudit gaz et le mélange réactionnel ainsi formé, pour lequel le rapport R du nombre de moles de vapeur d'eau au nombre de moles de $CS_2$ était égal à 16,7, était introduit dans un réacteur renfermant un catalyseur identique à celui décrit dans l'exemple 1 avec un débit correspondant à une VVH égale à 900 $h^{-1}$, le temps de contact dudit mélange réactionnel avec le catalyseur étant de 4 secondes. La température du mélange réactionnel amené au réacteur était telle que la température en sortie du réacteur était égale à 290°C pendant toute la durée du traitement.

L'effluent sortant du réacteur renfermait moins de 10 vpm de $CS_2$, ce qui correspond à un rendement de conversion de $CS_2$ en $H_2S$ supérieur à 99,8 %.

Au cours d'essais de longue durée, le taux de conversion de $CS_2$ en $H_2S$ conservait la valeur précitée après plusieurs mois de fonctionnement.

En conservant les mêmes conditions opératoires que celles venant d'être décrites, on traitait le gaz renfermant $H_2S$ défini au début du présent exemple, après lui avoir ajouté 0,5 % en volume d'oxygène. Le taux de conversion du $CS_2$ conservait la valeur précitée pendant plusieurs mois de fonctionnement.

### Exemple 4:

On traitait un gaz renfermant, en volume, 93,5 % d'$H_2S$ , 0,9 % de $CS_2$, 1,5 % de COS et 4,1 % de $CO_2$, ledit gaz étant destiné à être utilisé comme source d'$H_2S$ dans la synthèse de produits thioorganiques.

A ce gaz on ajoutait une quantité de vapeur d'eau représentant 30 % du volume dudit gaz et le mélange réactionnel ainsi formé, pour lequel le rapport R du nombre de moles de vapeur d'eau au nombre total de moles de COS et $CS_2$ était égal à 12,5, était introduit dans un réacteur renfermant un catalyseur identique à celui décrit dans l'exemple 1 avec un débit correspondant à une VVH égale à 600 $h^{-1}$, le temps de contact dudit mélange réactionnel avec le catalyseur étant de 6 secondes.

La température du mélange réactionnel amené au réacteur était telle que la température en sortie du réacteur était égale à 260°C pendant toute la durée du traitement. Cette température correspondait à celle conduisant au taux de rejet minimum en COS + $CS_2$ dans l'effluent.

L'effluent sortant du réacteur renfermait une teneur globale de 350 vpm en COS et $CS_2$ (50 vpm de $CS_2$ et 300 vpm de COS), ce qui correspond à un taux global de conversion égal à 98,5 %. Ce taux de conversion se maintenait encore après plusieurs mois de fonctionnement.

En conservant les mêmes conditions opératoires que celles venant d'être décrites, on traitait le gaz renfermant $H_2S$ défini au début du présent exemple après lui avoir ajouté 0,5 % en volume d'oxygène. Le taux de conversion des impuretés COS et $CS_2$ se maintenait à 98,5 % pendant plusieurs mois de fonctionnement.

### Exemple 5:

On traitait un gaz destiné à servir de source d'$H_2S$ pour la synthèse de produits thioorganiques et renfermant, en volume, 94 % d'$H_2S$, 1 % de COS et 5 % de $CO_2$.

A ce gaz on ajoutait une quantité de vapeur d'eau représentant 6 % du volume dudit gaz et le mélange réactionnel ainsi obtenu, pour lequel le rapport R du nombre de moles de vapeur d'eau au nombre de moles de COS était égal à 6, était introduit dans un réacteur renfermant un catalyseur identique à celui utilisé dans l'exemple 1 avec un débit correspondant à une VVH égale à 600 $h^{-1}$, le temps de contact dudit mélange réactionnel avec le catalyseur étant de 6 secondes. La température du mélange réactionnel amené au réacteur était telle que la température en sortie du réacteur était égale à 165°C pendant toute la durée du traitement.

L'effluent sortant du réacteur ne renfermait plus que 90 vpm de COS, ce qui correspond à un rendement de conversion du COS en $H_2S$ égal à 99,1 %.

Ce taux de conversion se maintenait encore après plusieurs mois de fonctionnement.

**Exemple 6:**

On opérait comme décrit dans l'exemple 5 en remplaçant toutefois le catalyseur à base de TiO$_2$ et de sulfate de calcium par un catalyseur consistant en extrudés d'oxyde de titane ayant un diamètre de 5 mm. Ledit catalyseur possédait les caractéristiques suivantes :

- surface spécifique          160 m$^2$/g
- volume poreux total          0,37 cm$^3$/g
- résistance à l'attrition      1,1 %

L'effluent gazeux sortant du réacteur ne renfermait plus que 80 vpm de COS, ce qui correspond à un rendement de conversion de COS en H$_2$S égal à 99,2 %. Ce taux de conversion se maintenait encore après plusieurs mois de fonctionnement.

Les valeurs des temps de contact données dans la présente description et dans les revendications associées sont définies dans les conditions normales de pression et de température. Il en est de même des valeurs de VVH indiquées dans les exemples.

**Revendications**

1. Procédé pour l'élimination des composés COS et CS$_2$ d'un gaz industriel renfermant l'un vu l'autre de ces composés ou les deux en quantité correspondant à une concentration en volume du composé COS ou CS$_2$ lorsqu'il est seul ou du mélange desdits composés allant de 0,01 % à 6 %, dans lequel on fait passer ledit gaz renfermant une quantité appropriée de vapeur d'eau au contact d'un catalyseur a base d'oxyde de titane placé dans une zone de réaction, caractérisé en ce que l'on contrôle la quantité de vapeur d'eau présente dans le gaz amené au contact du catalyseur de telle sorte que, dans ledit gaz, le rapport R du nombre de moles de vapeur d'eau au nombre de moles du ou des composés COS et CS$_2$ présents dans le gaz ait une valeur allant de la valeur stoechiométrique correspondant à une hydrolyse complète desdits composés à $\frac{50}{1 + 1,5 \, p}$, avec p représentant la fraction molaire de CS$_2$ dans la quantité molaire totale de COS et CS$_2$ contenue dans le gaz, en ce que l'on maintient la zone de réaction à des températures correspondant à des températures en sortie de ladite zone comprises entre $\theta_1 = 100 \, (0,6 + 1,6 \, q)°C$ et $\theta_2 = 100 \, (2,2 + 1)°C$ et en ce que l'on fixe le temps de contact du mélange réactionnel, c'est-à-dire du gaz à traiter renfermant la quantité appropriée de vapeur d'eau, avec le catalyseur à une valeur allant de (4 - 2q) secondes à (10 - 2q) secondes, q ayant la valeur zéro si p a une valeur allant de zéro à 0,1 et la valeur 1 dans les autres cas.

2. Procédé suivant la revendication 1 caractérisé en ce que l'on maintient la température dans la zone de réaction à des valeurs correspondant à des températures en sortie de ladite zone allant de 100 (1 + 1,5 q)°C à 100 (2 + q)°C.

3. Procédé suivant la revendication 1 ou 2, caractérisé en ce que le temps de contact du mélange réactionnel avec le catalyseur a une valeur allant de (5 - 2q) secondes à (8 - 2q) secondes.

4. Procédé suivant l'une des revendiactions 1 à 3, caractérisé en ce que la concentration en volume du composé COS ou CS$_2$, s'il est seul, ou des composés COS et CS$_2$, s'ils sont présents ensemble, dans le gaz à traiter a une valeur allant de 0,05 % à 4 %.

5. Procédé suivant l'une des revendications 1 à 4, caractérisé en ce que le gaz à traiter renferme COS comme seul composé organique du soufre ou COS et CS$_2$ en proportions correspondant à des valeurs de p au plus égales à 0,1 et en ce que l'on opère en contrôlant la quantité de vapeur d'eau dans le gaz amené au contact du catalyseur pour que le rapport R ait une valeur allant de 5 à 25, en maintenant la température dans la zone de réaction à des valeurs correspondant à des températures en sortie de ladite zone allant de 100 à 200°C et en choisissant un temps de contact du mélange réactionnel avec le catalyseur allant de 5 à 8 secondes.

6. Procédé suivant l'une des revendications 1 à 4, caractérisé en ce que le gaz à traiter renferme CS$_2$ comme seul composé organique du soufre et en ce que l'on opère en contrôlant la quantité de vapeur d'eau dans le gaz amené au contact du catalyseur pour que le rapport R ait une valeur allant de 5 à 20, en maintenant la température dans la zone de réaction à des valeurs correspondant à des températures en sortie de ladite zone allant de 250 a 300°C et en choisissant un temps de contact du mélange réactionnel avec le catalyseur allant de 3 à 6 secondes.

7. Procédé suivant l'une des revendications 1 à 4, caractérisé en ce que le gaz à traiter renferme à la fois CS$_2$ et COS en proportions correspondant à des valeurs de p supérieures à 0,1 et en ce que l'on opère en contrôlant la quantité de vapeur d'eau dans le gaz amené au contact du catalyseur pour que le rapport R ait une valeur allant de 5 à 25, en maintenant la température dans la zone de réaction à des valeurs correspondant à des températures en sortie de ladite zone allant de 250 à 300°C et en choisissant un temps de contact du mélange réactionnel avec le catalyseur allant de 5 à 8 secondes.

8. Procédé suivant l'une des revendications 1 à 7, caractérisé en ce que le catalyseur consiste en oxyde de titane ou en un mélange d'oxyde de titane et d'un sulfate d'un métal alcalino-terreux choisi parmi Ca, Ba, Sr et Mg, ledit sulfate étant en particulier le sulfate de Ca.

9. Procédé suivant la revendication 8, caractérisé en ce que le catalyseur, en plus de l'oxyde de titane et éventuellement du sulfate de métal alcalino-terreux, renferme jusqu'à 30 % de son poids d'au moins un constituant choisi parmi la silice, l'alumine, les argiles, les silicates, le sulfate de titane et les fibres céramiques.

10. Procédé suivant la revendication 6 ou 9, caractérisé en ce que le catalyseur renferme de l'oxyde de titane et un sulfate de métal alcalino-terreux et que, dans le catalyseur, le rapport de la proportion pondérale en oxyde de titane, exprimée en $TiO_2$, à la proportion pondérale en sulfate de métal alcalino-terreux à une valeur allant de 99 : 60 : 40 et se situant de préférence de 99 : 1 à 80 : 20.

11. Procédé suivant l'une des revendications 1 à 10, caractérisé en ce que le catalyseur a une surface spécifique comprise entre 5 et 300 $m^2/g$ et de préférence entre 10 et 240 $m^2/g$.

12. Procédé suivant l'une des revendications 1 à 11, caractérisé en ce que le catalyseur a un volume poreux total, déterminé par la méthode de pénétration au mercure, compris entre 0,05 et 0,6 $cm^3/g$ et de préférence entre 0,1 et 0,4 $cm^3/g$.

13. Procédé suivant l'une des revendications 1 à 12, caractérisé en ce que l'effluent de la zone de réaction est soumis à un traitement d'élimination de l'$H_2S$ qu'il contient.

14. Procédé suivant la revendication 13, caractérisé en ce que le gaz à traiter est un gaz issu de la gazéification de charbon.

15. Procédé suivant l'une des revendications 1 à 12, caractérisé en ce que le gaz à traiter est un gaz consistant en majeure partie en $H_2S$ et renfermant COS et/ou $CS_2$ à titre d'impuretés gênantes.

16. Procédé suivant l'une des revendications 1 à 15, caractérisé en ce que l'on sépare tout ou partie de la vapeur d'eau contenue dans l'effluent issu de la zone de réaction.

## Patentansprüche

1. Verfahren zur Entfernung der Verbindungen COS und $CS_2$ aus einem Industriegas, welches die eine oder die andere dieser Verbindungen oder beide in einer Menge enthält, die einer Volumenkonzentration der Verbindung COS oder $CS_2$, wenn diese allein vorliegt, oder des Gemisches der genannten Verbindungen von 0,01 bis 6 % entspricht, wobei man das genannte Gas, das eine entsprechende Menge Wasserdampf enthält, mit einem in eine Reaktionszone gebrachten Katalysator auf Titanoxidbasis in Kontakt bringt, dadurch gekennzeichnet, daß man die Wasserdampfmenge in dem mit dem Katalysator in Kontakt gebrachten Gas so steuert, daß im genannten Gas das Verhältnis R der Zahl der Mole Wasserdampf zur Zahl der Mole der im Gas vorliegenden Verbindung bzw. Verbindungen COS und $CS_2$ einen Wert vom stöchiometrischen Wert, der einer vollständigen Hydrolyse der genannten Verbindungen entspricht, bis zu $\frac{50}{1+1,5p}$ aufweist, wobei p den Molaranteil des $CS_2$ an der Gesamtmolarmenge an COS und $CS_2$, die im Gas enthalten ist, darstellt, und daß man die Reaktionszone bei Temperaturen am Ausgang der genannten Zone zwischen $\theta_1 = 100 (0,6 + 1,6 g)°C$ und $\theta_2 = 100 (2,2 + q)°C$ hält und daß man die Dauer der Kontaktierung des Reaktionsgemisches, d. h. des zu behandelnden, die entsprechende Wasserdampfmenge enthaltenden Gases mit dem Katalysator bei einem Wert von (4 - 2q) Sekunden bis (10 - 2q) Sekunden festlegt, wobei q den Wert 0 aufweist, wenn p einen Wert von 0 bis 0,1 hat, und in den übrigen Fällen den Wert 1 aufweist.

2. Verfahren nach Anspruch 1, dadurch gekennzeichnet, daß man die Temperatur in der Reaktionszone bei Werten hält, die Temperaturen am Ausgang der genannten Zone von 100 (1 + 1,5 q)°C bis 100 (2 + q)°C entsprechen.

3. Verfahren nach Anspruch 1 oder 2, dadurch gekennzeichnet, daß die Dauer der Kontaktierung des Reaktionsgemisches mit dem Katalysator einen Wert von (5 - 2q) Sekunden bis (8 - 2q) Sekunden aufweist.

4. Verfahren nach einem der Ansprüche 1 bis 3, dadurch gekennzeichnet, daß die Volumenkonzentration der Verbindung COS oder $CS_2$, wenn sie allein vorliegt, oder der Verbindungen COS und $CS_2$, wenn sie gleichzeitig vorliegen, in dem zu behandelnden Gas einen Wert von 0,05 bis 4 % aufweist.

5. Verfahren nach einem der Ansprüche 1 bis 4, dadurch gekennzeichnet, daß das zu behandelnde Gas COS als einzige organische Schwefelverbindung oder COS und $CS_2$ in Mengen enthält, die p-Werten von höchstens 0,1 entsprechen, und daß man es durchführt, indem man die Wasserdampfmenge in dem zur Kontaktierung mit dem Katalysator herangeführten Gas so einstellt, daß das Verhältnis R einen Wert von 5 bis 25 hat, wobei man die Temperatur in der Reaktionszone bei Werten hält, die Temperaturen am Ausgang der Zone von 100 bis 200°C entsprechen, und eine Dauer der Kontaktierung des Reaktionsgemisches mit dem Katalysator von 5 bis 8 Sekunden wählt.

6. Verfahren nach einem der Ansprüche 1 bis 4, dadurch gekennzeichnet, daß das zu behandelnde Gas $CS_2$ als einzige organische Schwefelverbindung enthält und daß man es durchführt, indem man die Wasserdampfmenge in dem zur Kontaktierung mit dem Katalysator herangeführten Gas so einstellt, daß das Verhältnis R einen Wert von 5 bis 20 hat, wobei man die Temperatur in der Reaktionszone bei Werten hält, die Temperaturen am Ausgang der Zone von 250 bis 300°C entsprechen und eine Dauer der Kontaktierung des Reaktionsgemischen mit dem Katalysator von 3 bis 6 Sekunden wählt.

7. Verfahren nach einem der Ansprüche 1 bis 4, dadurch gekennzeichnet, daß das zu behandelnde Gas gleichzeitig $CS_2$ und COS in Mengen enthält, die p-Werten von über 0,1 entsprechen, und daß man es durchführt, indem man die Wasserdampfmenge in dem zur Kontaktierung mit dem Katalysator herangeführten Gas so einstellt, daß das Verhältnis R einen Wert von 5 bis 25 hat, wobei man die Temperatur in der Reaktionszone bei Werten hält, die Temperaturen am Ausgang der Zone von 250 bis 300°C entsprechen, und eine Dauer der Kontaktierung des Reaktionsgemisches mit dem Katalysator von 5 bis 8 Sekunden wählt.

8. Verfahren nach einem der Ansprüche 1 bis 7, dadurch gekennzeichnet, daß der Katalysator aus Titanoxid oder einem Gemisch aus Titanoxid und einem Sulfat eines Erdalkalimetalls, ausgewählt unter Ca, Ba, Sr und Mg, besteht, wobei das Sulfat insbesondere Calciumsulfat ist.

9. Verfahren nach Anspruch 8, dadurch gekennzeichnet, daß der Katalysator außer Titanoxid und gegebenenfalls einem Erdalkalimetallsulfat auch noch bis zu 30 % seines Gewichts wenigstens eine Komponente umfaßt, ausgewählt aus Kieselerde, Tonerde, Tonen, Silihaten, Titansulfat und Keramikfasern.

10. Verfahren nach einem der Ansprüche 8 oder 9, dadurch gekennzeichnet, daß der Katalysator Titanoxid und ein Erdalkalimetallsulfat umfaßt und daß im Katalysator das Verhältnis der Gewichtsmenge an Titanoxid, ausgedrückt in $TiO_2$, zur Gewichtsmenge an Erdalkalimetallsulfat einen Wert von 99 : 1 bis 60 : 40 und vorzugsweise von 99 : 1 bis 80 : 20 aufweist.

11. Verfahren nach einem der Ansprüche 1 bis 10, dadurch gekennzeichnet, daß der Katalysator eine spezifische Oberfläche zwischen 5 und 300 m²/g und vorzugsweise zwischen 10 und 240 m²/g aufweist.

12. Verfahren nach einem der Ansprüche 1 bis 11, dadurch gekennzeichnet, daß der Katalysator ein Gesamtporenvolumen, ermittelt nach der Methode des Eindringens mit Quecksilber, zwischen 0,05 und 0,6 cm³/g und vorzugsweise zwischen 0,1 und 0,4 cm³/g aufweist.

13. Verfahren nach einem der Ansprüche 1 bis 12, dadurch gekennzeichnet, daß der Abfluß aus der Reaktionszone einer Behandlung zur Entfernung des enthaltenen $H_2S$ unterzogen wird.

14. Verfahren nach Anspruch 13, dadurch gekennzeichnet, daß das zu behandelnde Gas ein aus der Vergasung von Kohle stammendes Gas ist.

15. Verfahren nach einem der Ansprüche 1 bis 12, dadurch gekennzeichnet, daß das zu behandelnde Gas ein Gas ist, das zum überwiegenden Teil aus $H_2S$ besteht und als störende Verunreinigungen COS und/oder $CS_2$ enthält.

16. Verfahren nach einem der Ansprüche 1 bis 15, dadurch gekennzeichnet, daß man den gesamten im Abfluß aus der Reaktionszone enthaltenen Wasserdampf oder einen Teil davon abtrennt.


## Claims

1. A process for removing COS and $CS_2$ compounds from an industrial gas containing only one of these compounds or both in a quantity corresponding to a concentration by volume of the single compound COS or $CS_2$ or of the mixture of said compounds ranging from 0.01 % to 6 %, which comprises contacting said gas containing a suitable quantity of water vapor with a titanium oxide based catalyst arranged in a reaction zone, said process being characterised by the steps of controlling the quantity of water vapor present in the gas put into contact with the catalyst in such a way that in said gas the ratio R of the number of moles of water vapor to the number of moles of COS or $CS_2$ compound or COS and $CS_2$ compounds present in the gas has a value of from the stoichiometric value corresponding to a complete hydrolysis of said compounds to $\frac{50}{1+1.5\,p}$ with p representing the molar faction of $CS_2$ in the total molar fraction of COS and $CS_2$ contained in the gas, maintaining the reaction zone at temperatures corresponding to temperatures at the exit of said zone comprised between $\theta_1 = 100\,(0.6 + 1.6\,q)°C$ and $\theta_2 = 100\,(2.2 + q)°C$ and selecting for the contact time of the reaction mixture, i.e. the gas to be treated containing the suitable quantity of water vapor, with the catalyst a value ranging from $(4 - 2\,q)$ seconds to $(10 - 2\,q)$ seconds, q being equal to zero when p has a value of from 0 to 0.1 or being equal to 1 when p has another value.

2. A process according to claim 1, characterised in that the temperature in the reaction zone is maintained at values corresponding to temperatures at the exit of said zone of from $100\,(1 + 1.5\,q)°C$ to $100\,(2 + q)°C$.

3. A process according to claim 1 or 2, characterised in that the contact time of the reaction mixture with the catalyst has a value ranging from $(5 - 2\,q)$ seconds to $(5 - 2\,q)$ seconds.

4. A process according to any of claims 1 to 3, characterised in that the gas to be treated has a concentration by volume of COS or $CS_2$ when only one of these compounds is present in the gas or a concentration by volume of COS and $CS_2$ when both compounds are present in the gas, which has a value ranging from 0.05 % to 4 %.

5. A process according to any of claims 1 to 4, characterised in that the gas to be treated contains COS as the only organic sulfur compound or COS together with $CS_2$ in proportions corresponding to p values at most equal to 0.1, the quantity of water vapor in the gas put into contact with the catalyst is controlled so that the ratio R has a value ranging from 5 to 25, the temperature in the reaction zone is maintained at values corresponding to temperatures at the exit of said zone of from 100°C to 200°C and the contact time of the reaction mixture with the catalyst ranges from 5 to 8 seconds.

6. A process according to any of claims 1 to 4, characterised in that the gas to be treated contains $CS_2$ as the only organic sulfur compound, the quantity of water vapor in the gas put into contact with the catalyst is controlled so that the ratio R is from 5 to 20, the temperature in the reaction zone is maintained at values corresponding to temperatures at the exit of said zone of from 250 to 300°C and the contact time of the reaction mixture with the catalyst is from 3 to 6 seconds.

7. A process according to any of claims 1 to 4, characterised in that the gas to be treated contains both $CS_2$ and COS in proportions corresponding to p values above 0.1, the quantity of water vapor in the gas put into contact with the catalyst is controlled so that the ratio R is from 5 to 25, the temperature in the reaction zone is maintained at values corresponding to temperatures at the exit of said zone of from 250 to 300°C and the contact time of the reaction mixture with the catalyst ranges from 5 to 8 seconds.

8. A process according to any of claims 1 to 7, characterised in that the catalyst consists of titanium oxide or of a mixture of titanium oxide with a sulfate of an alkaline earth metal selected from Ca, Ba, Sr and Mg, said sulfate being in particular calcium sulfate.

9. A process according to claim 8, characterised in that, in addition to titanium oxide and, if any, the alcaline earth metal sulfate, the catalyst also contains up to 30 % of its weight, of at least one component selected from silica, alumina, clays, silicates, titanium sulfate and ceramic fibers.

10. A process according to claim 8 or 9, characterised in that the catalyst contains titanium oxide and an alkaline earth metal sulfate in a titanium oxide, expressed as $TiO_2$, to alkaline earth metal sulfate weight ratio ranging from 99 : 1 to 60 : 40 and preferably from 99 : 1 to 80 : 20.

11. A process according to any of claims 1 to 10, characterised in that the catalyst has a specific surface area comprised between 5 and 300 $m^2$/g and preferably between 10 and 240 $m^2$/g.

12. A process according to any of claims 1 to 11, characterised in that the catalyst has a total porous volume, determined by the mercury penetration method, comprised between 0.05 and 0.6 $cm^2$/g and preferably between 0.1 and 0.4 $cm^2$/g.

13. A process according to any of claims 1 to 12, characterised in that the effluent from the reaction zone is subjected to a treatment for elimination of any $H_2S$ contained therein.

14. A process according to claim 13, characterised in that the gas to be treated is a gas originating from the gasification of coal.

15. A process according to any of claims 1 to 12, characterised in that the gas to be treated is a gas consisting mostly of $H_2S$ and containing $COS$ and/or $CS_2$ as undesirable impurities.

16. A process according to any of claims 1 to 15, characterised in that all or part of the water vapor contained in the effluent from the reaction zone is separated.